Europäisches Patentamt

European Patent Office

Office européen des brevets

(19)

(11) Veröffentlichungsnummer: **0 173 813 B1**

(12) **EUROPÄISCHE PATENTSCHRIFT**

(45) Veröffentlichungstag der Patentschrift: 27.02.91

(51) Int. Cl.⁵: **H04M 17/02**

(21) Anmeldenummer: 85107938.4

(22) Anmeldetag: 26.06.85

(54) **Kommunikationsnetz.**

(30) Priorität: 05.09.84 DE 3432558

(43) Veröffentlichungstag der Anmeldung:
12.03.86 Patentblatt 86/11

(45) Bekanntmachung des Hinweises auf die
Patenterteilung:
27.02.91 Patentblatt 91/09

(84) Benannte Vertragsstaaten:
AT DE FR NL SE

(56) Entgegenhaltungen:
EP-A- 0 041 261
FR-A- 2 286 565
FR-A- 2 503 423

ELECTRONIQUE ET APPLICATIONS INDU-
STRIELLES, Band 280, 1. März 1980, Seiten
40-41, Paris, FR; J.-P. DELLA MUSSIA:
"SGS-ATES propose la première carte de
crédit à circuit intégré au monde"

(73) Patentinhaber: ROBERT BOSCH GMBH
Postfach 50
D-7000 Stuttgart 1(DE)

(72) Erfinder: Wazeck, Jürgen, Dr.-Ing.
Wiltinger Strasse 20 c
D-1000 Berlin 28(DE)

(74) Vertreter: Schmidt, Hans-Ekhardt
Robert Bosch GmbH Geschäftsbereich Elektronik Patent- und Lizenzabteilung Forckenbeckstrasse 9-13
D-1000 Berlin 33(DE)

## Beschreibung

Es ist ein Fernsprechnetz bekannt (Funkschau, 1983, Heft 23, S.60), bei dem die von einem Fernsprechteilnehmer zu zahlenden Gebühreneinheiten mittels einer Gebührenkarte entrichtet werden. Der Teilnehmer schiebt nach dem Abheben des Hörers seines Fernsprechapparates eine mit einer bestimmten Zahl von Gebühreneinheiten versehene Gebührenkarte in einen Schlitz eines Freischaltgerätes, das dem Fernsprechapparat vorgeschaltet ist. Kommt die von dem Teilnehmer gewünschte Fernsprechverbindung zustande, dann bucht das Freischaltgerät bei jedem von der Zentrale gesendeten Gebührenimpuls eine Gebühreneinheit von der Gebührenkarte ab. Während des Gesprächs wird die Zahl der jeweils noch verfügbaren Gebühreneinheiten auf einem Anzeigefeld sichtbar gemacht. Erst nach dem Auflegen des Höres am Ende des Gesprächs kann die Gebührenkarte dem Freischaltgerät entnommen werden; es sei denn, es sind schon vor Gesprächsende alle Gebühreneinheiten der Gebührenkarte verbraucht. Bei dem bekannten System wird die in den Schlitz des Freischaltgerätes eingeschobene Gebührenkarte vollständig in das Freischaltgerät eingezogen, wozu ein verhältnismäßig hoher technischer Aufwand erforderlich ist.

## Vorteile der Erfindung

Das erfindungsgemäße Kommunikationsnetz mit den kennzeichnenden Merkmalen des Anspruchs 1 hat den Vorteil, daß das Freischaltgerät keine Mittel zum Verhindern des vorzeitigen Herausziehens der Gebührenkarte aus dem Freischaltgerät aufweisen muß und daß trotzdem keine Gebühreneinheit durch ein vorzeitiges Herausziehen der Gebührenkarte verlorengeht.

## Zeichnung

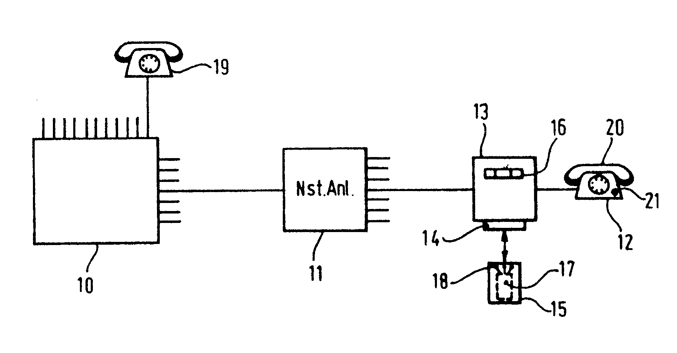

Ein Ausführungsbeispiel der Erfindung wird in der Zeichnung an Hand eines erfindungsgemäßen Fernsprechnetzes gezeigt.

## Beschreibung der Erfindung

Nach dem in der Zeichnung gezeigten stark vereinfachten Blockschaltbild ist ein öffentliches Fernsprechnetz 10 mit mindestens einer Nebenstellenanlage 11 verbunden, an die mehrere Drahtteilnehmer angeschlossen sind, von denen in der Zeichnung nur der Fernsprechapparat 12 gezeigt ist. Vor den Fernsprechapparat 12 ist ein Freischaltgerät 13 geschaltet, das nur durch eine in einen Schlitz 14 des Freischaltgerätes einschiebbare Gebührenkarte 15 betätigt werden kann. Das Freischaltgerät weist ein Anzeigefeld 16 für auf der Gebührenkarte vorhandene Gebühreneinheiten auf. Die Gebührenkarte hat vorzugsweise die Form einer Scheckkarte und enthält als Speicher für die Gebühreneinheiten zum Beispiel einen elektronischen Speicher 17, dessen Anschlüsse mit von außen zugänglichen Kontakten 18 verbunden sind.

Will der Teilnehmer mit dem Fernsprechapparat 12 ein Gespräch mit einem anderen Fernsprechteilnehmer, zum Beispiel mit einem Fernsprechapparat 19, führen, so steckt er in den Schlitz 14 seines Freischaltgerätes 13 eine Gebührenkarte 15, woraufhin in dem Anzeigefeld 16 die Zahl der auf der Gebührenkarte noch vorhandenen Gebühreneinheiten erscheint. Nimmt er dann den Hörer 20 seines Fernsprechapparates 12 ab und wählt er die erste Ziffer der Rufnummer des gewünschten Teilnehmers, so wird sofort eine als zusätzliche Gebühreneinheit bezeichnete Gebühreneinheit von der Gebührenkarte abgebucht. Bei einer Gebührenkarte mit elektronischem Speicher 17 geschieht dies durch Löschen des der Gebühreneinheit zugeordneten Speicherplatzes. Dem rufenden Teilnehmer wird somit vorab eine Gebühreneinheit abgezogen, obgleich noch keine Sprechverbindung zustande gekommen ist. Wählt der Teilnehmer dann die anderen Ziffern der Rufnummer des gewünschten Teilnehmers und kommt die Sprechverbindung zustande, dann liefert die Zentrale 10 in bekannter Weise in bestimmten Zeitabständen Gebührenimpulse an den rufenden Teilnehmer, die in dessen Freischaltgerät ausgewertet werden und je Gebührenimpuls eine Abbuchung einer Gebühreneinheit von der Gebührenkarte 15 zur Folge haben.

Zieht der Teilnehmer während der Gesprächsverbindung die Gebührenkarte aus dem Schlitz 14 heraus, so erfolgt mit dem nächsten eintreffenden Gebührenimpuls eine zwangsweise Trennung der Verbindung. Da der letzte Gebührenimpuls wegen des Fehlens der Gebührenkarte keine Abbuchung einer Gebühreneinheit mehr auslösen kann, wird die anfänglich abgebuchte zusätzliche Gebühreneinheit einbehalten.

Bleibt die Gebührenkarte 15 dagegen bis zum Endes des Gespräches, das ist bis zum Auflegen des Hörers 20, in dem Freischaltgerät 13, so erfolgt eine Rückbuchung der anfangs abgebuchten zusätzlichen Gebühreneinheit.

Bei einem Nebenstellen-Fernsprechnetz erfolgt das Abbuchen der zusätzlichen Gebühreneinheit vorzugsweise erst dann, wenn der Teilnehmer das öffentliche Fernsprechnetz wählt, das heißt, wenn er eine sogenannte Amtsauswahlziffer (zum Beispiel die Ziffer "0") wählt oder eine Erdtaste 21 eines Fernsprechapparates 12 betätigt.

**Ansprüche**

1. Kommunikationsnetz mit einer Zentrale und mindestens einem mit der Zentrale verbundenen und über ein Freischaltgerät einschaltbaren Kommunikationsgerät, wobei die Zentrale derart ausgestaltet ist, daß bei in das Freischaltgerät eingesteckter Gebührenkarte und hergestellter Verbindung zwischen Zentrale und Kommunikationsgerät in vorgegebenen Zeitabständen Gebührenimpulse an das Freischaltgerät geliefert werden und daß das Freischaltgerät je Gebührenimpuls eine Gebühreneinheit von der Gebührenkarte abbucht, **dadurch gekennzeichnet**, daß die Zentrale ferner derart ausgestaltet ist, daß bereits unmittelbar nach dem Einstecken der Gebührenkarte (15) in das Freischaltgerät (13) und dem Einleiten der Verbindung durch den Teilnehmer eine zusätzliche Gebühreneinheit von der Gebührenkarte abgebucht wird, daß die Verbindung mit dem Eintreffen des letzten Gebührenimpulses automatisch unterbrochen wird, daß im Normalfall die zusätzliche Gebühreneinheit auf der Gebührenkarte gutschrieben wird und daß die zusätzliche Gebühreneinheit im Falle eines Herausziehens der Gebührenkarte aus dem Freischaltgerät vor Verbindungsende einbehalten wird.

2. Kommunikationsnetz nach Anspruch 1 für ein Nebenstellen-Fernsprechnetz, dadurch gekennzeichnet, daß das Abbuchen der zusätzlichen Gebühreneinheit durch das Einwählen in das öffentliche Fernsprechnetz ausgelöst wird.

**Claims**

1. Communication network having an exchange and at least one communication device, which is connected to the exchange and can be switched on by way of an enabling device, wherein the exchange is designed in such a way that, when a call charge card is inserted into the enabling device and a connection is made between the exchange and the communication device, meter pulses are delivered at predetermined time intervals to the enabling device, and the enabling device debits one unit charge from the call charge card per meter pulse, characterised in that the exchange is further designed in such a way that directly the call charge card (15) is inserted into the enabling device (13) and the connection is initiated by the subscriber, an additional unit charge is debited from the call charge card, the connection is automatically broken on arrival of the last meter pulse, in the normal case the additional unit charge is credited on the call charge card and the additional unit charge is retained if the call charge card is withdrawn from the enabling device before the connection is terminated.

2. Communication network as in claim 1 for an extension telephone network, characterised in that the debiting of the additional unit charge is triggered by dialling into the public telephone network.

**Revendications**

1. Réseau de transmission avec une centrale et au moins un appareil de transmission relié à la centrale et susceptible d'être mis en circuit par l'intermédiaire d'un appareil de déconnexion, la centrale étant prévue de façon que lorsqu'une carte de taxation est introduite dans l'appareil de déconnexion et que la liaison entre la centrale et l'appareil de transmission a été établie, des impulsions de taxation sont délivrées à des intervalles de temps prédéfinis à l'appareil de déconnexion et cet appareil de déconnexion débite à chaque impulsion de taxation, une unité de taxation sur la carte de taxation, réseau de transmission caractérisé en ce que la centrale est en outre prévue de façon que déjà immédiatement après l'insertion de la carte de taxation (15) dans l'appareil de déconnexion (13) et l'établissement de la liaison par l'abonné, une unité de taxation supplémentaire soit débitée sur la carte de taxation, que la liaison soit automatiquement interrompue par l'arrivée de la dernière impulsion de taxation, que dans le cas normal l'unité supplémentaire de taxation soit créditée sur la carte de taxation, et qu'en cas d'un retrait de la carte de taxation hors de l'appareil de déconnexion avant la fin de la liaison, cette unité supplémentaire de taxation soit conservée.

2. Réseau de transmission selon la revendication 1, pour un réseau téléphonique supplémentaire caractérisé en ce que le débit de l'unité de taxation supplémentaire est déclenché par l'accession au réseau publique.